# EUROPÄISCHE PATENTSCHRIFT

(11) **EP 1 713 614 B1**
(45) Veröffentlichungstag und Bekanntmachung des Hinweises auf die Patenterteilung: **23.09.2009**
(21) Anmeldenummer: 05707281.1
(22) Anmeldetag: 09.02.2005
(51) Int. Cl.: B23Q 1/00, B23B 31/107, B23B 31/30

(54) **SCHNELLSPANNZYLINDER MIT SICHERHEITSVORRICHTUNG GEGEN BLOCKIERUNG**
QUICK-ACTION CLAMPING CYLINDER WITH AN ANTI-BLOCKING SAFETY DEVICE
CYLINDRE A SERRAGE RAPIDE COMPORTANT UN DISPOSITIF DE SECURITE CONTRE LE BLOCAGE

(30) Priorität: 09.02.2004 DE 102004006418
(43) Veröffentlichungstag der Anmeldung: 25.10.2006
(73) Patentinhaber: Zero-Point-Systems Günther Stark GmbH, 6840 Götzis (AT)
(72) Erfinder: STARK, Günther, Jakob, A-6972 Fussach (AT)
(74) Vertreter: Riebling, Peter
(86) Internationale Anmeldenummer: PCT/EP2005/001291
(87) Internationale Veröffentlichungsnummer: WO 2005/075145

(56) Entgegenhaltungen:
- EP-A- 0 936 025
- DE-A1- 10 006 847
- DE-A1- 19 834 040
- DE-U1- 20 219 338
- US-A- 5 909 882

## Beschreibung

Die Erfindung betrifft einen Schnellspannzylinder mit Sicherheitsvorrichtung gegen Blockierung nach dem Oberbegriff des Patentanspruchs 1. Ein Schnellspannzylinder mit den Merkmalen des Oberbegriffs des Anspruchs 1 ist in der US 5,909,882 A offenbart.

Schnellspannzylinder sind in einer Vielzahl von Druckschriften bekannt geworden. Es wird beispielsweise auf die DE 198 34 040 A1 oder die DE 198 34 040 C2 verwiesen. Auf das dortige Funktionsprinzip wird Bezug genommen.

Schnellspannzylinder der eingangs genannten Art arbeiten mit einer mechanischen Verriegelung des an einer Werkstückpalette befestigten Einzugnippels. Es ist hierbei bekannt, einen im Gehäuse des Schnellspannzylinders eingezogenen Einzugsnippel unter Federlast zu arretieren. Die Arretierung des Einzugsnippels erfolgt mit über sich am Umfang des Einzugsnippels anlegenden Verriegelungskörpern, die diesen in der arretierten Lage im Gehäuse des Schnellspannzylinders halten.

Die Verriegelungsstellung wird durch Federn erreicht, die in der Regel als Tellerfedern ausgebildet sind und sich mit ihrem einen Ende an der Bodenseite des Schnellspannzylinders und mit dem anderen Ende gegen einen drucköl- oder druckluftbetätigten Sperrkolben abstützen.

Statt der hier beschriebenen Tellerfedern können alle anderen, bekannten Kraftspeicher verwendet werden. Kennzeichnend für diese Art der Ausbildung von Schnellspannzylindern ist, dass die Verriegelung der Verriegelungskörper am Einzugsnippel mittels Federkraft erfolgt und dass die Entriegelung durch Drucköl oder Druckluft erzielt wird.

Der Einfachheit halber wird in der folgenden Beschreibung nur die Anwendung eines Druckmediums in Form von Drucköl beschrieben, obwohl die Erfindung auch andere Druckmedien, wie z. B. Glykol, Luft und dgl. vorsieht.

Zur Entriegelung wird in einen Zylinderraum zwischen dem Gehäuse und dem dort abgedichtet verschiebbaren Sperrkolben ein Druckmedium eingeführt, das den Sperrkolben gegen die Kraft der Federn bewegt, um so die Verriegelungskörper freizugeben und außer Eingriff mit dem Einzugsnippel zu bringen.

Bei dieser Art von Schnellspannzylindern ist es im Übrigen erforderlich, dass eine gute Abdichtung zwischen der zentralen Mittenbohrung, in welche der Einzugsnippel eintaucht, und den radial auswärts gerichteten Federräumen für die Aufnahme des Federpaketes besteht.

Fehlt es an dieser Dichtung, dann besteht die Gefahr, dass bei Eindringen von Wasser in die zentrale Mittenbohrung das Wasser in den benachbarten Federraum gelangt und dort das Federpaket durch Korrosion beschädigt. Daher wird üblicherweise dieser Federraum gegen Eindringen von Fremdstoffen abgedichtet. Der Federraum ist somit hermetisch gegen die übrigen Gehäuseteile abgedichtet.

In einigen Anwendungsfällen kam es jedoch vor, dass die Abdichtung zwischen dem Sperrkolben und dem Gehäuse schadhaft wurde oder beim Zusammenbau des Schnellspannzylinders von vorneherein beschädigt war. Dies führte dazu, dass beim Einführen eines Druckmediums in den Zylinderraum dieses über die schadhafte Dichtung in den (abgedichteten) Federraum gelangte. Ein solcher Betriebszustand führte zur Außerbetriebsetzung des Schnellspannzylinders durch Selbstblockierung:

Wenn bei schadhafter Abdichtung zwischen dem Zylinder und dem Gehäuse des Schnellspannzylinders das Drucköl in den Federraum gelangte, führte dies dazu, dass der Federraum mit dem Drucköl angefüllt wurde und - nachdem die Federn gegen den Sperrkolben wirkten - der Sperrkolben damit blockiert wurde. Von der einen Seite wirkte der mit dem Drucköl gefüllte Zylinderraum auf den Sperrkolben und von der anderen Seite wirkte (mit einer wesentlich größeren Fläche) das gleiche Drucköl auf den Sperrkolben, was diesen blockierte, weil zu der von unten auf den Sperrkolben wirkenden Lecköl-Kraft noch zusätzlich die Federkraft des Federpaketes wirkte.

Damit konnte der Schnellspannzylinder nicht mehr entriegelt werden und es gab auch keine Möglichkeit, von außen her an den Schnellspannzylinder heranzukommen, um eine Entriegelung zu ermöglichen. Dies daher, weil in der Regel die Oberseite des Schnellspannzylinders durch die aufgeschraubte Wechselpalette abgedeckt war und der Schnellspannzylinder an der Unterseite in einer vertieften Aufnahmebohrung im Maschinentisch eingebaut war. Er war deshalb im Arbeitszustand nicht mehr von außen zugänglich und die vorher genannte Blockade auf Grund schadhafter Dichtungen konnte nicht mehr beseitigt werden.

Als einziges Mittel war es deshalb nur möglich, den Öldruck auf den Sperrkolben im Zylinder soweit zu erhöhen, dass der Deckel nach oben abgesprengt wurde, was mit erheblicher Unfallgefahr verbunden war.

Mit der DE 100 06 847 C2 ist es bekannt, eine einfache Ablaufbohrung vom Federraum in die zentrale Mittenbohrung vorzusehen. Damit soll das in den Federraum eingedrungene Schmutzwasser über die Ablaufbohrung in die zentrale Mittenbohrung geleitet werden. Zu diesem Zweck ist vorgesehen, die Ablaufbohrung an den Bodenbereich des Federraums anzuschliessen, um eine vollständige Entwässerung zu erreichen.

Es hat sich jedoch gezeigt, dass diese Art der Entwässerung des Federraums nicht geeignet ist, den Federraum vor Eindringen von Schmutzwasser, insbesondere vor dem Eindringen von mit Spänen verschmutztem Wasser zu schützen.

Bei der Entfernung von Wasser aus der zentralen Mittenbohrung ist es üblich, dieses Wasser mit einer Pressluftpistole auszublasen. In diesem Fall wird jedoch das mit Späne verschmutzte Wasser in die Ablaufbohrung gepresst und in den Federraum eingetragen, was zu schweren Schäden am Federpaket führen kann.

Auch entsteht beim Eindringen des Einzugsbolzens in die zentrale Mittenbohrung ein Überdruck, der dazu führt, dass das am Boden der Mittenbohrung lagernde, mit Spänen belastete Schmutzwasser über die Ablaufbohrung in den Federraum gepresst wird.

Es muss daher ein weiterer Lufteinblaskanal an der Oberseite des Federraums vorgesehen werden. Durch Einblasen von Luft muss dann der verschmutzte Federraum wieder frei geblasen werden, sodass das mit Spänen belastete Schmutzwasser wieder in die zentrale Mittenbohrung zurück befördert wird.

Die druckloses Wasser führende Ablaufbohrung kann im übrigen durch eindringende Fremdkörper verstopft werden. Eine solche Anordnung ist deshalb nicht geeignet, eine Blockierung der Verriegelungseinrichtung bei Eindringen von Schmutzwasser in den Federraum zu verhindern.

Der Erfindung liegt deshalb die Aufgabe zu Grunde, einen Schnellspannzylinder der eingangs genannten Art so weiterzubilden, dass eine Blockierung der federbelasteten Verriegelungseinrichtung bei schadhaften Dichtungen verhindert wird.

Zur Lösung der gestellten Aufgabe ist die Erfindung durch die technische Lehre des Anspruchs 1 gekennzeichnet.

Wesentliches Merkmal der Erfindung ist, dass mindestens im Federraum eine Entlastungsbohrung angeordnet ist, welche in einen von außen zugänglichen Freiraum führt und dass im Bereich der Entlastungsbohrung ein Ventilglied oder ein Druckkörper angeordnet ist, das bzw. der bei Bestehen eines Überdrucks im Federraum in seine Öffnungsstellung gebracht wird.

Mit der gegebenen technischen Lehre ergibt sich der wesentliche Vorteil, dass nun bei Eindringen von Lecköl (oder einem anderen Druckmedium) in den Federraum dieses Druckmedium nun auch in die Entlastungsbohrung am Federraum eintritt und ein dort angeordnetes Ventil druckentlastend in seine Öffnungsstellung betätigt.

Damit ist es nicht mehr möglich, dass sich im Federraum ein so großer Druck aufbaut, der den Druck der Federn sogar verstärkt, um so den Sperrkolben in seiner Verriegelungsstellung gegen die Verriegelungskörper arretiert zu halten.

Jeglicher Druckaufbau im Federraum wird durch die vorher beschriebene Ventilanordnung beseitigt.

Für die Ausbildung der Ventilanordnung gibt es mehrere Ausführungsbeispiele, die sämtlich vom Erfindungsgedanken umfasst sind.
In einer ersten Ausgestaltung der Erfindung ist es vorgesehen, dass in den Federraum mindestens eine Bohrung führt, die in einen Freiraum mündet, in dem mindestens ein verformbarer Ventilkörper angeordnet ist.

In einer bevorzugten Ausgestaltung der Erfindung ist es vorgesehen, dass dieser verformbare Ventilkörper als Steuerring ausgebildet ist, der sich bei Einwirken eines entsprechenden Druckmediums verformt und auf Grund seiner Verformung eine Entlastungsbohrung frei gibt.

Diese Entlastungsbohrung kann beispielsweise in die Mittenbohrung des Schnellspannzylinders führen, so dass das in den Federraum eingedrungene Drucköl in die Mittenbohrung ausströmt und keinen Schaden anrichtet.

Für den Betreiber des Schnellspannzylinders ist damit bei Inspektion der Mittenbohrung ohne Weiteres erkennbar, dass eine oder mehrere Dichtungen des Schnellspannzylinders beschädigt sind.

In einer anderen Ausgestaltung der vorliegenden Erfindung kann der verformbare Ventilkörper aus einem Druckstopfen bestehen, der in Ölentlastungsrichtung in der Entlastungsbohrung reibschlüssig eingesetzt ist.

Wird also der Druck im abgedichteten Federraum so stark erhöht, dass er über die Entlastungsbohrung auch auf den Druckstopfen wirkt, wird dieser nach einer gewissen Druckerhöhung aus der Entlastungsbohrung herausgeschleudert und das Drucköl wird somit aus dem Federraum entlassen.

Hierbei wird es bevorzugt, wenn die wirksame Fläche des Drucköls auf den Druckstopfen möglichst groß gewählt ist, d. h. der Druckstopfen wird bereits schon bei relativ geringen Drücken aus der Entlastungsbohrung herausgetrieben.

Die Erfindung ist jedoch nicht auf verformbare Steuerringe oder Druckstopfen beschränkt.
In einer dritten Ausgestaltung kann es vorgesehen sein, dass ein Membranventil verwendet wird, welches ebenfalls ringsumlaufend eine oder mehrere Entlastungsbohrungen abschließt und dessen Membrane ebenfalls unter Einwirkung des Druckmediums verformbar ist, so dass die entsprechende Entlastungsbohrung in den Freiraum freigegeben wird.

Ebenso ist es möglich, sogenannte federbelastete Ventile (Überdruckventile) vorzusehen, bei denen entgegen der Kraft einer Steuerfeder ein Ventilkörper gegen eine Steuerfläche gepresst wird. Bei Überschreitung der Federkraft dieser Steuerfeder wird somit der Ventilkörper von seiner Steuerfläche abgehoben und das Drucköl wird über die Entlastungsbohrung ins Freie geleitet.

Im Folgenden wird die Erfindung an Hand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Fig. 1:: Schnitt durch eine erste Ausführungsform eines Schnellspannzylinders ohne Ausblasvorrichtung;
- Fig. 2:: Schnitt in Höhe des Zwischenraums zwischen der Kugelauflage und der Federauflage des Schnellspannzylinders;
- Fig. 3:: einen Schnellspannzylinder nach Figur 1 mit zusätzlicher Ausblasvorrichtung.

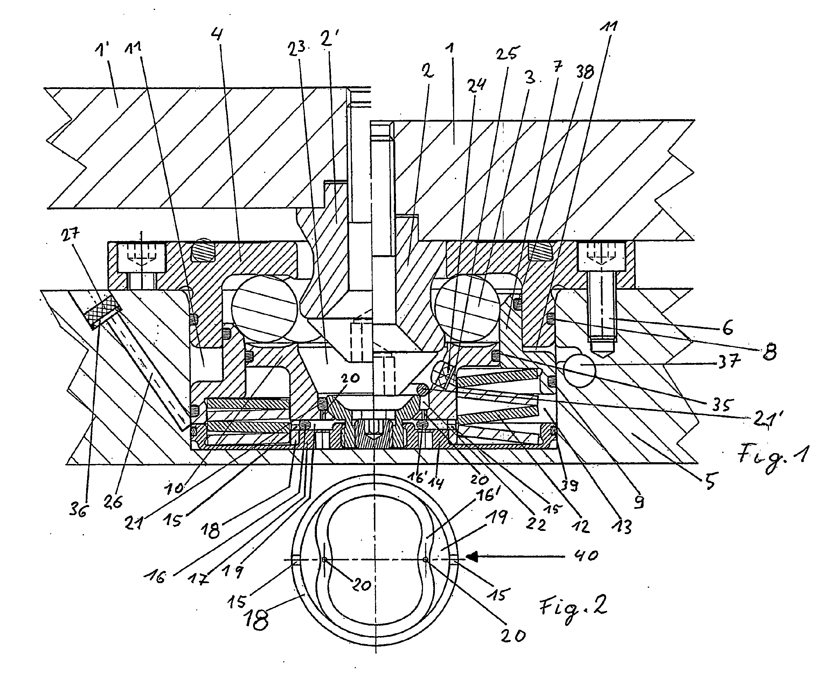

In den Figuren 1 bis 3 ist ein Schnellspannzylinder dargestellt, wie er in einer Vielzahl von bereits bestehenden Anmeldungen beschrieben ist. Auf den Offenbarungsinhalt der bestehenden und bereits veröffentlichten Anmeldungen wird hingewiesen.

Auf einer Wechselpalette 1 sind in der Regel ein oder mehrere Schraubstöcke oder Befestigungsmittel angeordnet, welche zu bearbeitende Werkstücke halten. Die Wechselpalette 1 wird mit einem Einzugsnippel verbunden, der in eine zentrale Mittenbohrung 23 des Schnellspannzylinders eintaucht und dort verriegelbar ist.

Der Schnellspannzylinder weist einen oberen Deckel 4 auf, der mittels Schrauben 6 auf einen zugeordneten Maschinentisch 5 aufgeschraubt ist.

Statt der Einbringung des gesamten Gehäuses des Schnellspannzylinders in einer zugeordneten Aufnahme im Maschinentisch 5 gibt es auch sogenannte Aufbaulösungen, bei denen das gesamte Gehäuse auf die Oberfläche eines Maschinentisches 5 aufgeschraubt ist.

Die Verriegelung des Einzugsnippels 2 mittels Verriegelungskörpern 3 ist in der rechten Darstellung der Figur 1 gezeigt, während der entlastete und entriegelte Zustand in der linken Darstellung der Figur 1 gezeigt ist.

Die Verriegelung der Verriegelungskörper 3 erfolgt mit Hilfe eines druckölbetätigten Sperrkolbens 7, der sich mit Dichtungen 9, 35 einerseits an der Innenseite einer Kugelauflage 10 und andererseits an der Innenseite der zentralen Ausnehmung im Maschinentisch 5 dichtend anlegt und dort verschiebbar ist.

Der Deckel 4 selbst weist einen axialen Ansatz auf, der ebenfalls mit mindestens einer Dichtung 8 sich an der Innenseite der zentralen Ausnehmung im Maschinentisch 5 dichtend anlegt.

Zur Entriegelung des Sperrkolbens 7 wird über den Druckölanschluss 37 ein Druckmedium eingeführt, das in den Druckraum 11 eingeführt wird. Hierbei erfolgt die Abdichtung des Druckraumes 11 durch die Dichtungen 9, 35 und 38.

Bei Einführen des Drucköls in den Druckraum 11 wird somit der Sperrkolben 7 in axialer Richtung nach unten verfahren, wie dies auf der linken Seite der Figur 1 dargestellt ist. Die Verriegelungskörper 3 geraten damit außer Eingriff mit den zugeordneten Verriegelungsflächen am Einzugsnippel 2 und dieser Einzugsnippel kann somit frei auf der zentralen Mittenbohrung 23 des Gehäuses des Schnellspannzylinders nach oben herausgezogen werden.

Ist nun beispielsweise die Dichtung 9 am Sperrkolben 7 schadhaft, kann es passieren, dass vom Druckraum 11 Drucköl über die schadhafte Dichtung 9 in den darunter liegenden abgedichteten Federraum 13 läuft.

In diesen Federraum 13 ist ein Tellerfederpaket aus Druckfedern 12 angeordnet, wobei dieses Tellerfederpaket gegen die Unterseite des Sperrkolbens 7 wirkt.

Der Federraum 13 ist nach unten über eine Dichtung 39 gegen die Ausnehmung im Maschinentisch 5 abgedichtet.

Die Federn liegen hierbei auf einer plattenförmigen Federauflage 14 auf, die nach unten durch die Dichtung 39 abgedichtet ist.

Die Verriegelungskörper 3 liegen auf einer Kugelauflage 10 auf, welche mit radial auswärtsgerichteten Flächen die Gegenflächen für den Sperrkolben 7 bildet.

Bei Fehlen der erfindungsgemäßen Sicherungsvorrichtung würde sich nun der Federraum 13 mit Drucköl füllen und das Drucköl würde zusammen mit der Federkraft der Druckfeder 12 auf die Unterseite des Sperrkolbens 7 wirken, so dass dieser in der Verriegelungsstellung nach Figur 1 (rechte Darstellung) gehalten wird. Diese Verriegelungsstellung ist nicht mehr aufhebbar. Zur Aufhebung müsste nämlich über den Druckölanschluss 37 wiederum Drucköl in den Druckraum 11 eingeführt werden, welches jedoch nicht gelingt, weil die Dichtung 9 schadhaft ist.

Hier setzt die Erfindung ein, die vorsieht, dass mindestens an einer Stelle der Federraum 13 eine Bohrung 15 angeordnet ist, die druckentlastend nach außen gerichtet ist.

In dem ersten gezeigten Ausführungsbeispiel nach Figur 1 reicht die, die Abdichtung des Federraums 13 unterbrechende Bohrung 15 in einen Freiraum 19 hinein und in diesem Freiraum 19 ist ein verformbarer Steuerring 16 angeordnet.

In einer bevorzugten Ausgestaltung besteht dieser Steuerring 16 aus einem verformbaren O-Ring, der im Freiraum 19 frei verformbar ist.

Strömt nun das Drucköl in Pfeilrichtung 40 durch die Bohrung 15 in den Freiraum 19 ein, dann wird somit der Steuerring 16 unter Druck gesetzt, weil er nach oben und unten in den Freiraum 19 abdichtet. Er wird sich unter Einwirkung des Druckmediums in der in Figur 2 dargestellten Weise etwa oval verformen und gibt somit eine darüber liegende und im Freiraum angeordnete Entlastungsbohrung 20 frei.

In der Darstellung nach Figur 2 hat der verformte Steuerring 16 noch nicht die eingezeichnete Entlastungsbohrung 20 vollständig freigegeben. Die Freigabe erfolgt mit weiterer, radial einwärts gerichteter Verformung des Steuerringes 16 in der in Figur 2 dargestellten Lage.

Das Drucköl strömt dann über die Entlastungsbohrung 20 gegen einen Dichtungsring 21, der im Zwischenraum zwischen der Kugelauflage 10 und einer Einschraubmutter für die Befestigung des Federpaketes angeordnet ist.

Auch dieser Dichtring 21 sitzt in einem Aufnahmeraum 22, aus dem der Dichtring unter Einwirkung des Druckmediums in dem Aufnahmeraum 22 nach oben verschoben wird, wie dies auf der rechten Seite in Figur 1 mit 21' dargestellt ist.

Es werden bei der ersten Ausführung der Sicherungseinrichtung nach der Erfindung zwei verschiedene Ringe verformt, nämlich einmal der Steuerring 16 und zum Zweiten der Dichtungsring 21.

Nach der Verformung des Dichtungsringes 21 in seine Stellung 21' strömt somit das Drucköl in die zentrale Mittenbohrung 23 und kann dort leicht entfernt werden. Sobald nun Lecköl in die zentrale Mittenbohrung 23 eintritt, ist der Druck aus dem Federraum 13 entfernt und durch weitere Druckaufgabe am Druckölanschluss 37 wird somit der Sperrkolben 7 in seine entriegelte Stellung nach Figur 1 (linke Darstellung) herab gefahren.

Der Vollständigkeit halber sei noch erwähnt, dass sich die Kugelauflage 10 mit einem axial nach unten verlängerten Ansatz 18 an die Seitenwand am Federraum 13 anlegt und dass die Bohrung 15 im Bereich dieses Ansatzes 18 der Kugelauflage 10 angeordnet ist.

An diesen Ansatz 18 schließt sich ein weiterer axialer Ansatz 17 der Federauflage 14 an. Im Bereich dieses Ansatzes 17 ist der vorher erwähnte Freiraum 19 angeordnet, in dem der verformbare Steuerring 16, 16' angeordnet ist.

Die Figur 1 zeigt noch zwei weitere Ausführungsbeispiele, die völlig unabhängig von dem erstgenannten Ausführungsbeispiel funktionieren und deshalb auch unabhängigen Schutz ( bezogen auf die anderen Ausführungsbeispiele) genießen sollen.

Die Figur 1 zeigt auf der rechten Seite, dass der Federraum 13 mit einer Entlastungsbohrung 25 versehen ist, die in die zentrale Mittenbohrung 23 führt und dass im Bereich dieser Entlastungsbohrung 25 ein Druckstopfen 24 angeordnet ist, der bei Druckanstieg in der Entlastungsbohrung 25 in Richtung auf die zentrale Mittenbohrung 23 herausgetrieben wird.

Auch für diesen Fall strömt dann das Drucköl - bei entferntem Druckstopfen 24 - in die zentrale Mittenbohrung 23 hinein.

Als drittes Ausführungsbeispiel zeigt die Figur 1 auf der linken Seite, dass an einem Spalt des Federraums, der nach außen führt, eine Entlastungsbohrung 26 angeschlossen ist, in der in Öffnungsrichtung gesehen ein Druckstopfen 27 eingesetzt ist.

Um den Druckstopfen 27 möglichst mit großer Kraft bei niedrigen Drücken austreiben zu können, vergrößert sich die Entlastungsbohrung 26 im Bereich des Druckstopfens 27 um eine im Durchmesser vergrößerte Druckfläche 36, um so eine wirksame Austreibkraft auf den Druckstopfen 27 zu erzeugen, wenn ein entsprechender Druckaufbau in der Entlastungsbohrung 26 gegeben ist.

Die Druckfläche 26 kann durch einen Anschlag begrenzt werden, um auch beim Einstecken des Druckstopfens 27 eine Gegendruckfläche 36 freizulassen.

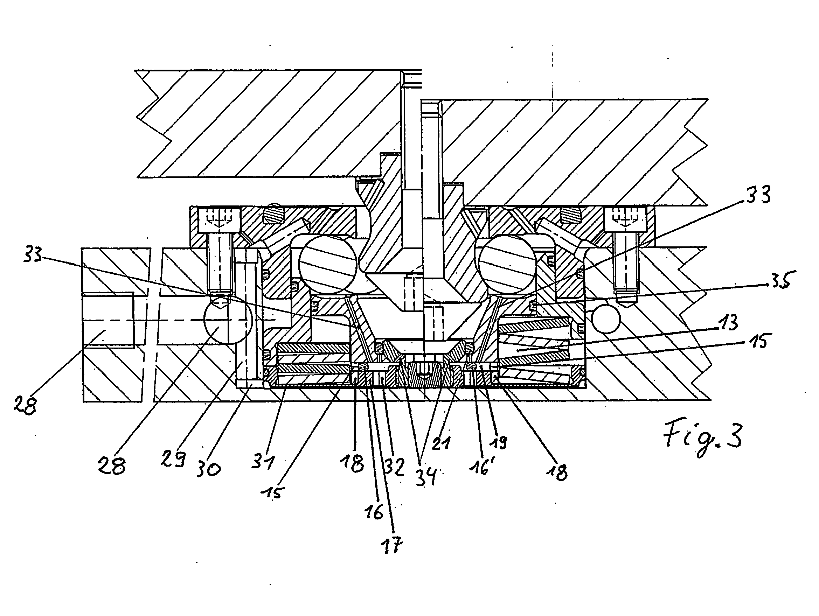

Die Figur 3 zeigt einen gleichen Schnellspannzylinder, wie in Figur 1 gezeigt, nur dass zusätzlich noch eine sogenannte Ausblasvorrichtung vorhanden ist. Diese Ausblasvorrichtung dient dazu, über eine Luftzuführung 28 Pressluft in den Innenraum des Schnellspannzylinders einzubringen, die über eine Längsbohrung 29 nach oben und unten verzweigt, so dass verschiedene Teile im Schnellspannzylinder mit Pressluft abgereinigt werden.

Sinn dieser Maßnahme ist, dass der Innenraum des Schnellspannzylinders bei Eindringen von Schmutz, Spänen und anderen Fremdkörpern an den kritischen Flächen freigeblasen wird.

Die Figur 3 zeigt, dass Ausblaskanäle der Luftausblasung für die Entlastung des Federraums von Drucköl verwendet werden.

Hierzu ist in Figur 3 dargestellt, dass der Federraum 13 durch die vorher erwähnte Bohrung 15 im Ansatz 18 nach außen hin geöffnet ist und wiederum die verformbare Dichtung 16 im Freiraum 19 angeordnet ist.

Bei Verformung dieser Dichtung in der in Figur 2 dargestellten Weise wird somit die Mündung der Blasbohrung 33 frei und das Drucköl strömt durch die Blasbohrung 33 nach oben in Richtung auf die Kugelauflage der Verriegelungskörper 3.

Zusätzlich kann es vorgesehen sein, dass das Öl auch über die jetzt freigewordene Bohrung 32 für den Luftkanal abströmt und hierbei über einen bodenseitigen Luftkanal 31 in eine Freistellung 30 gelangt und von dort aus in die Längsbohrung 29, für die Einführung der Pressluft.

Auf diese Weise strömt das Drucköl nicht zwangsläufig in die zentrale Mittenbohrung 23, sondern es kann auch in die Blasöffnungen einströmen oder sogar im Anschluss für die Luftzuführung 28 austreten.

Es wird also ein anderer Ausflusskanal für das Drucköl verwendet, als vergleichsweise in Figur 1.

Bei Einströmen in die bodenseitige Bohrung 32 kann das Drucköl im Übrigen auch über die für die Luftzuführung vorgesehene Blasbohrung 34 in die zentrale Mittenbohrung 23 einströmen.

Wichtig bei allen Maßnahmen ist also, dass im Bereich des abgedichteten Federraumes mindestens eine Entlastungsbohrung mit mindestens einem Ventil angeordnet ist, welches bei Überdruck im Federraum nach außen hin öffnet und das Druckmedium entlässt.

Hierbei sieht die Erfindung mehrere Möglichkeiten vor, wo das Drucköl schließlich hinfließt. Es kann in die zentrale Mittenbohrung 23 einfließen oder auch in die Luftkanäle für die Luftausblasung eines Schnellspannzylinders nach Figur 3.

Ebenso ist es nach Figur 1 (linke Darstellung) möglich, das Drucköl unmittelbar am Maschinentisch 5 selbst auszulassen.

Gleiches gilt für den Fall der Verwendung eines Aufbauzylinders, da es aus dem Gehäuse des Aufbauzylinders heraustritt.

Wichtig bei allen Maßnahmen ist, dass die vorher erwähnte schädliche Blockierlage des Sperrkolbens an den Verriegelungskörpern verhindert wird, auch wenn eine oder mehrere Dichtungen im Innenraum des Schnellspannzylinders beschädigt sind.

### Zeichnungslegende

- 1: Wechselplatte 1'
- 2: Einzugsnippel 2'
- 3: Verriegelungskörper
- 4: Deckel
- 5: Maschinentisch
- 6: Schrauben
- 7: Sperrkolben
- 8: Dichtung
- 9: Dichtung
- 10: Kugelauflage
- 11: Druckraum
- 12: Druckfeder
- 13: Federraum
- 14: Federauflage
- 15: Bohrung
- 16: Steuerring 16'
- 17: Ansatz (Federauflage)
- 18: Ansatz (Kugelauflage)
- 19: Freiraum
- 20: Entlastungsbohrung
- 21: Dichtungsring 21'
- 22: Aufnahmeraum
- 23: zentrale Mittenbohrung
- 24: Druckstopfen
- 25: Entlastungsbohrung
- 26: Entlastungsbohrung
- 27: Druckstopfen
- 28: Luftzuführung
- 29: Längsbohrung
- 30: Freistellung
- 31: Luftkanal
- 32: Bohrung
- 33: Blasbohrung
- 34: Blasbohrung
- 35: Dichtung
- 36: Druckfläche
- 37: Druckölanschluss
- 38: Dichtung
- 39: Dichtung
- 40: Pfeilrichtung

## Patentansprüche

1. Schnellspannzylinder mit Sicherungsvorrichtung, der eine mechanische Verriegelung eines zentralen Einzugnippels (2) in einer zentralen Mittenbohrung (23) im Gehäuse vorsieht, wobei sich in der Verriegelungsstellung ein oder mehrere Verriegelungskörper (3) am Außenumfang des Einzugnippels unter der Last eines Federpaketes anlegen, das in einem oder mehreren Federräumen (13) im Gehäuse angeordnet ist und die Entriegelungsstellung des Einzugnippels (2) durch die Druckbeaufschlagung eines Sperrkolbens (7) erfolgt, der gegen die Last des Federpaktes wirkt, wobei im Federraum (13) mindestens eine Entlastungsbohrung (15, 25, 26) angeordnet ist, die in einen druckentlasteten Freiraum führt, wobei im Bereich der Entlastungsbohrung (15, 25, 26) ein Ventilglied oder ein Druckkörper (16, 21, 24, 27) angeordnet ist, **dadurch gekennzeichnet, dass** das ventilgleid bzw. der Druckkörper bei Bestehen eines Überdrucks im Federraum (13) in seine Öffnungsstellung gebracht wird.

2. Sicherungsvorrichtung nach Anspruch 1, **dadurch gekennzeichnet, dass** aus dem Federraum (13) mindestens eine Bohrung führt, die in einen Freiraum mündet, in dem mindestens ein verformbarer Druckkörper (16, 21) angeordnet ist.

3. Schnellspannzylinder nach Anspruch 2, **dadurch gekennzeichnet, dass** der verformbare Ventilkörper als Steuerring ausgebildet ist, der sich bei Einwirken eines entsprechenden Druckmediums verformt und auf Grund seiner Verformung eine Entlastungsbohrung frei gibt.

4. Schnellspannzylinder nach Anspruch 3, **dadurch gekennzeichnet, dass** die Entlastungsbohrung in die Mittenbohrung des Schnellspannzylinders führt.

5. Schnellspannzylinder nach einem der Ansprüche 1 bis 4, **dadurch gekennzeichnet, dass** der verformbare Ventilkörper aus einem Druckstopfen besteht, der in Ölentlastungsrichtung in der Entlastungsbohrung reibschlüssig eingesetzt ist.

6. Schnellspannzylinder nach einem der Ansprüche 1 bis 5, **dadurch gekennzeichnet, dass** ein Membranventil ringsumlaufend eine oder mehrere Entlastungsbohrungen abschließt, dessen Membrane unter Einwirkung des Druckmediums verformbar ist und die Entlastungsbohrung in den Freiraum freigibt.

7. Schnellspannzylinder nach einem der Ansprüche 1 bis 6, **dadurch gekennzeichnet, dass** in der Entlastungsbohrung ein oder mehrere federbelastete Ventile (Überdruckventile) angeordnet sind, bei denen entgegen der Kraft einer Steuerfeder ein Ventilkörper in Schließstellung gegen eine Steuerfläche gepresst ist und der Ventilkörper flüssigkeitsleitend mit der Entlastungsbohrung verbunden ist.

## Claims

1. Quick-action clamping cylinder with a safety device, which provides mechanical locking of a central feed nipple (2) in a central hole (23) in the housing, wherein, in the locking position, one or more locking bodies (3) rest on the outer periphery of the feed nipple under the load of a spring packet, which is arranged in one or more spring compartments (13) in the housing and the unlocking position of the feed nipple (2) is implemented by the pressure loading of a locking piston (7), which acts against the load of a spring packet, at least one pressure relief hole (15, 25, 26) being arranged in the spring compartment (13), which hole leads into a pressure-relieved free space, wherein a valve element or a pressure body (16, 21, 24, 27) is arranged in the region of the pressure relief hole (15, 25, 26), **characterised in that** the valve body or the pressure body is brought into its opening position when an excess pressure exists in the spring compartment (13).

2. Safety device according to claim 1, **characterised in that** at least one hole, which opens into a free space, in which at least one deformable pressure body (16, 21) is arranged, leads out of the spring compartment (13).

3. Quick-action clamping cylinder according to claim 2, **characterised in that** the deformable valve body is configured as a control ring, which, upon the action of a corresponding pressure medium, deforms and because of its deformation opens a pressure relief hole.

4. Quick-action clamping cylinder according to claim 3, **characterised in that** the pressure relief hole leads into the central hole of the quick-action clamping cylinder.

5. Quick-action clamping cylinder according to any one of claims 1 to 4, **characterised in that** the deformable valve body consists of a pressure plug, which is inserted with frictional engagement in the oil relief direction in the pressure relief hole.

6. Quick-action clamping cylinder according to any one of claims 1 to 5, **characterised in that** a diaphragm valve peripherally closes one or more pressure relief holes, the diaphragm of which is deformable under the action of the pressure medium and opens the pressure relief hole into the free space.

7. Quick-action clamping cylinder according to any one of claims 1 to 6, **characterised in that** one or more spring-loaded valves (excess pressure valves) are arranged in the pressure relief hole, in which valves a valve body in the closing position is pressed against a control face counter to the force of a control spring and the valve body is connected in a fluid-conducting manner to the pressure relief hole.

## Revendications

1. Cylindre à serrage rapide avec un dispositif de sécurité, qui prévoit un verrouillage mécanique d'un raccord d'introduction central (2) dans un perçage central (23) du carter, étant précisé que dans la position de verrouillage, un ou plusieurs corps de verrouillage (3) s'appliquent contre la circonférence extérieure du raccord sous la contrainte d'un bloc-ressort disposé dans un ou plusieurs espaces de ressort (13) du carter, et que la position de déverrouillage du raccord (2) est obtenue grâce à la contrainte de pression d'un piston de blocage (7) qui agit à l'encontre de la contrainte du bloc-ressort, étant précisé qu'il est prévu dans l'espace de ressort (13) au moins un perçage de détente (15, 25, 26) qui mène à un espace de détente de pression, et qu'il est prévu dans la zone du perçage de détente (15, 25, 26) un organe formant soupape ou un organe de pression (16, 21, 24, 27),
**caractérisé en ce que** l'organe formant soupape ou l'organe de pression, en cas de surpression dans l'espace de ressort (13), est amené dans sa position d'ouverture.

2. Dispositif de sécurité selon la revendication 1, **caractérisé en ce qu'**il est prévu, à partir de l'espace de ressort (13), au moins un perçage qui débouche dans un espace dans lequel est disposé au moins un organe de pression déformable (16, 21).

3. Cylindre à serrage rapide selon la revendication 2, **caractérisé en ce que** le corps de soupape déformable est conçu comme une bague de commande qui se déforme si un agent de pression approprié agit et qui dégage un perçage de détente du fait de sa déformation.

4. Cylindre à serrage rapide selon la revendication 3, **caractérisé en ce que** le perçage de détente mène au perçage central du cylindre à serrage rapide.

5. Cylindre à serrage rapide selon l'une des revendications 1 à 4, **caractérisé en ce que** le corps de soupape déformable se compose d'un bouchon de pression qui est introduit par friction dans le perçage de détente, dans le sens de détente d'huile.

6. Cylindre à serrage rapide selon l'une des revendications 1 à 5, **caractérisé en ce qu'**une soupape à membrane ferme un ou plusieurs perçages de détente, tout autour, la membrane de ladite soupape étant déformable sous l'action de l'agent de pression et dégageant le perçage de détente qui mène audit espace.

7. Cylindre à serrage rapide selon l'une des revendications 1 à 6, **caractérisé en ce qu'**il est prévu dans le perçage de détente une ou plusieurs soupapes contraintes par ressort (soupapes de surpression) dans lesquelles un corps de soupape est poussé vers la position de fermeture contre une surface de commande, à l'encontre de la force d'un ressort de commande, et est relié au perçage de détente de manière à permettre un écoulement.
